# EUROPEAN PATENT SPECIFICATION

(11) **EP 2 953 262 B1**
(45) Date of publication and mention of the grant of the patent: **19.08.2020**
(21) Application number: 13873322.5
(22) Date of filing: 06.12.2013
(51) Int. Cl.: H02P 27/06, H02P 29/024

(54) **STEP-OUT DETECTION METHOD AND POWER CONVERSION DEVICE**
VERFAHREN ZUR ERKENNUNG OFFENER PHASEN UND STROMWANDLERVORRICHTUNG
PROCÉDÉ DE DÉTECTION D'ÉTAT HORS DE PHASE ET DISPOSITIF DE CONVERSION DE PUISSANCE

(30) Priority: 30.01.2013 JP 2013014984
(43) Date of publication of application: 09.12.2015
(73) Proprietor: Hitachi Industrial Equipment Systems Co., Ltd., Tokyo 101-0022 (JP)
(72) Inventor: ONUMA, Yusaku, Tokyo 101-0022 (JP)
(74) Representative: Strehl Schübel-Hopf & Partner
(86) International application number: PCT/JP2013/082755
(87) International publication number: WO 2014/119125

(56) References cited:
- DE-A1-102005 045 835
- JP-A- 2003 079 200
- JP-A- 2007 312 457
- US-A1- 2003 071 588

## Description

### TECHNICAL FIELD

The present invention relates to a step-out detection method and a power conversion device in drive control of a synchronous motor that does not use a rotating position detector.

### BACKGROUND ART

For driving of a synchronous motor typified by a permanent magnet synchronous motor, it is necessary to control a current in accordance with a rotor pole position of the synchronous motor and a power conversion device is used for control thereof. Information about the rotor pole position is indispensable for the drive control, and the rotor pole position is generally detected using a position detector. However, from the problems of a price of a position detector, environment resistance, and the like, various methods for estimating the rotor pole position from a voltage, a current, or the like of the synchronous motor and driving the synchronous motor are being proposed in recent years.

In the driving of the synchronous motor, when a control axis and a rotor pole axis are not rotated synchronously, that is, step-out occurs due to causes such as precipitous load fluctuation, it falls into an uncontrollable state of driving; and therefore, it is desirable that a power conversion device be stopped immediately. At this time, when a position detector is used, the driving can be controlled so as to prevent step-out, and occurrence of the step-out can be easily detected. However, when the position detector is not used, it is difficult to control the driving so as to prevent the step-out perfectly, or to detect occurrence of the step-out.

As a method for detecting the step-out without use of the position detector, for example, a method described in patent literature 1 is used. In patent literature 1, disclosed is "a control device of a permanent magnet type synchronous motor for performing sensorless control including an extension induced voltage operating unit for operating an extension induced voltage by using an equivalent terminal voltage value of a motor, an armature resistance voltage drop operation value and an armature reaction flux operation value proportional to an armature current, a transient voltage operation value proportional to a time differentiation value of the armature current, and a speed operation value, an angle operating unit for operating an angle from the extension induced voltage, a speed operating unit for obtaining a speed operation value by amplifying an angle of the extension induced voltage, a pole position operating unit for obtaining a pole position operation value by amplifying the speed operation value, and a step-out detector for detecting the step-out from an angle of the extension induced voltage" (Abstract). The document US 2003/071588 A1 discloses a power conversion device according to the preamble of claim 1.

### CITATION LIST

### PATENT LITERATURE

PATENT LITERATURE 1: JP-A-2008-278595

### NON PATENT LITERATURE

NON PATENT LITERATURE 1: Kiyoshi Sakamoto, Yoshitaka Iwaji, Tsunehiro Endo, "Position Sensorless Control of Permanent Magnet Synchronous Motor using Direct Estimation Operation of Axis Error", Heisei 12 IEE-Japan Industry Applications Society Conference Papers [III], No. 97, pp. 963-966, August Heisei 12

### SUMMARY OF INVENTION

### TECHNICAL PROBLEM

In the step-out detection method disclosed in patent literature 1, when an angle of the extension induced voltage jumps instantaneously and exceeds a predetermined threshold, for example, due to an influence of noises superimposed on an armature current detection value, the step-out is erroneously detected. Further, when a low-pass filter or the like is used to eliminate the influence of noises, in the case in which the step-out occurs such that an angle of the extension induced voltage pulsates with a high frequency, the step-out may fail to be detected.

In view of the foregoing, it is an object of the present invention to provide a highly reliable step-out detection method that can be unaffected by noises without use of a position detector in a power conversion device for performing drive control of a synchronous motor, and a power conversion device, as defined in claims 1 and 7.

### SOLUTION TO PROBLEM

A power conversion device includes a switching circuit that converts DC power into AC power, a PWM controller that outputs a switching control signal for controlling the switching circuit to be turned on or off on the basis of a voltage command, a current detector that detects a current flowing in a synchronous motor, an axis error estimator that estimates an axis error between a control axis and a rotor pole axis of the synchronous motor on the basis of the voltage command and a current detected by the current detector, a frequency component extractor that extracts an arbitrary frequency component of the axis error estimated by the axis error estimator, and a step-out determination unit that determines whether or not there is step-out on the basis of the frequency component extracted by the frequency component extractor.

### ADVANTAGEOUS EFFECTS OF INVENTION

According to the present invention, it is possible to provide a highly reliable step-out detection method that can be unaffected by noises without use of a position detector in a power conversion device for performing drive control of a synchronous motor, and a power conversion device.

### BRIEF DESCRIPTION OF DRAWINGS

[FIG. 1]FIG 1 illustrates one example of an aspect configuration of a power conversion device according to a first embodiment of the present invention.
[FIG 2]FIG 2 is illustrates one example of a relationship between a control axis and a rotor pole axis at the normal time and at the step-out time.
[FIG. 3]FIG 3 illustrates one example of an axis error and an integer multiple component waveform of an application voltage frequency in the axis error at the normal time and at the step-out time.

### DESCRIPTION OF EMBODIMENTS

Hereinafter, one embodiment of the present invention will be described with reference to the accompanying drawings. In the following descriptions, the same reference numerals are each given to common components in each drawing, and overlapping descriptions thereof will be omitted.

### FIRST EMBODIMENT

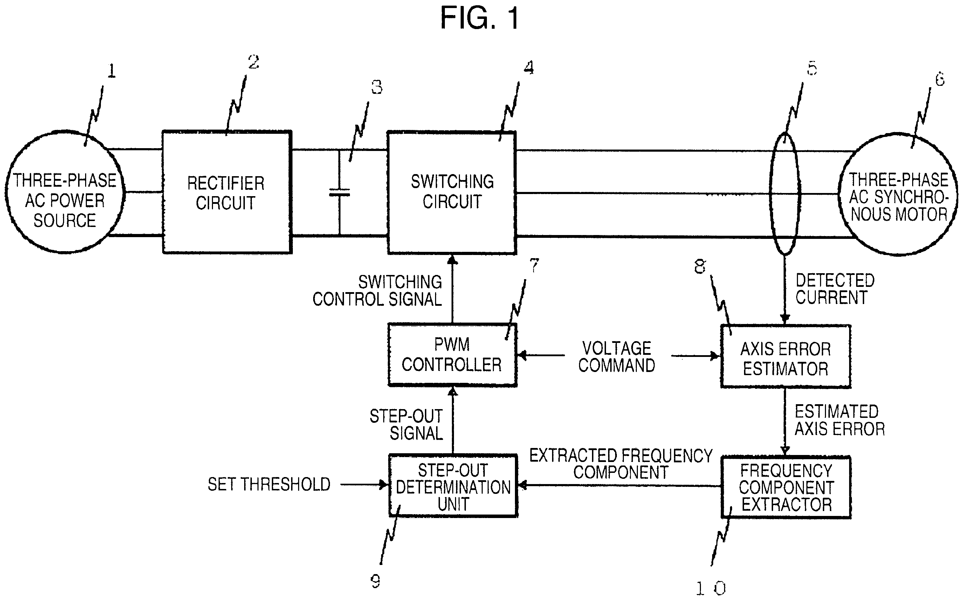

FIG. 1 illustrates one example of an aspect configuration of a power conversion device according to a first embodiment.

A three-phase AC voltage input from a three-phase AC power source 1 is rectified by a rectifier circuit 2 and is smoothed by a smoothing circuit 3.

A switching circuit 4 converts a voltage smoothed by the smoothing circuit 3, namely, a DC voltage into a three-phase AC voltage and applies it to a three-phase AC synchronous motor 6.

A PWM controller 7 outputs a switching control signal for controlling the switching circuit 4 to be turned on or off so that a voltage based on a voltage command is applied to the three-phase AC synchronous motor 6.

A current detector 5 detects a three-phase AC current flowing in the three-phase AC synchronous motor 6. Only two phases are detected and since a summation of a three-phase AC is equal to zero, the remaining one phase may be calculated. Further, a shunt resistance may be provided on a positive electrode side or a negative electrode side of the smoothing circuit 3, and the three-phase AC current may be estimated from a current flowing in this shunt resistance.

An axis error estimator 8 estimates an axis error between a control axis and a rotor pole axis of the three-phase AC synchronous motor 6 from a voltage command and a detected current. As a method for estimating the axis error from the voltage command and the detected current, for example, a method described in non patent literature 1 is used. In non patent literature 1, an induced voltage is directly calculated from a mathematical model of a permanent magnet synchronous motor and the axis error is estimated from the induced voltage.

A frequency component extractor 10 extracts an arbitrary frequency component of the estimated axis error. An arbitrary frequency component can be extracted, for example, by Fourier transformation. A frequency component to be extracted may be a plurality of frequency bands. Further, the frequency band of the frequency component to be extracted may be changed depending on a drive control state of the three-phase AC synchronous motor 6, for example, a rotation frequency of the control axis.

A step-out determination unit 9 performs a determination whether or not there is step-out using the extracted frequency component and a previously set threshold, and outputs a step-out signal. The threshold may be changed depending on driving states of the three-phase AC synchronous motor 6, for example, a frequency, a voltage, a current, or the like. Further, the threshold may be changed in accordance with signals or setting given from the outside. In the case in which the extracted frequency component is present in plurality, the threshold may be set for each and the determination whether or not there is the step-out may be performed on the basis of at least one or more combinations.

When the step-out signal is input to the PWM controller 7, the PWM controller 7 forcibly turns off all switches of the switching circuit 4, and cuts off an output of the switching circuit 4 or outputs alarm information. At least either of the output cutoff of the switching circuit 4 and the output of the alarm information may be performed.

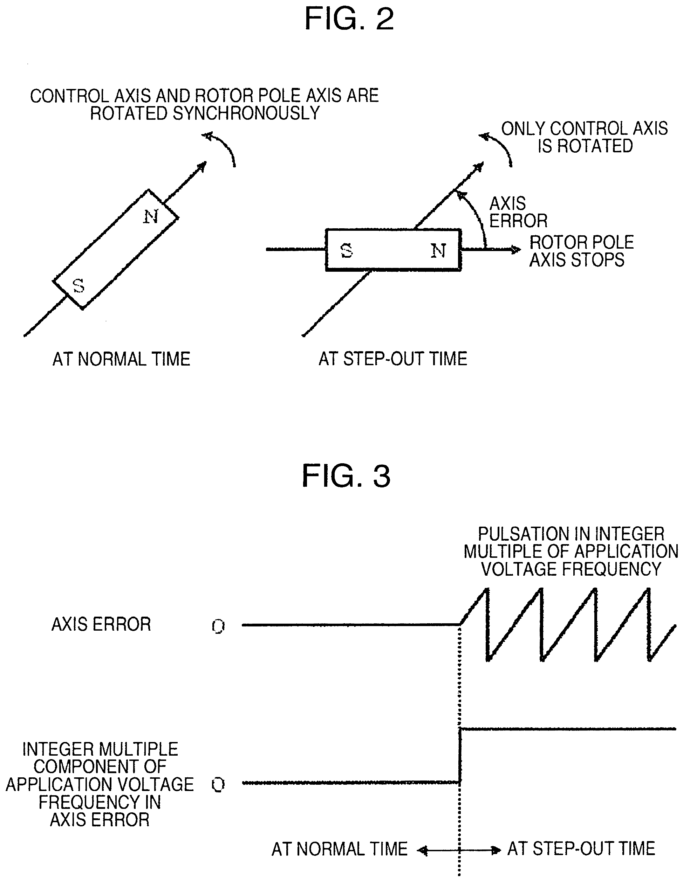

FIG. 2 illustrates one example of a relationship between the control axis and the rotor pole axis at the normal time and at the step-out time.

At the normal time, the control axis and the rotor pole axis are rotated synchronously at a frequency of the voltage applied to the three-phase AC synchronous motor 6. On the other hand, at the step-out time, the rotation of the three-phase AC synchronous motor 6 stops, and therefore the rotor pole axis also stops and only the control axis is rotated at a frequency of the voltage applied to the three-phase AC synchronous motor 6.

FIG. 3 illustrates one example of the axis error and the integer multiple component waveform of the application voltage frequency in the axis error at the normal time and at the step-out time.

At the normal time, the control axis and the rotor pole axis are rotated synchronously with each other, and therefore the axis error is equal to zero. On the other hand, the axis error at the step-out time pulsates in an integer multiple of an application voltage frequency, and therefore the frequency component thereof has a fixed value other than zero.

Accordingly, an integer multiple component of a voltage command frequency in the estimated axis error is extracted by the frequency component extractor 10 and is compared with the set threshold by the step-out determination unit 9, and thereby the step-out can be detected.

Further, as illustrated in FIG. 3, the integer multiple component of the application voltage frequency in the axis error at the step-out time has a fixed value other than zero. Therefore, when a low-pass filter, a moving average, or the like excluding high-frequency components is also used for the extracted frequency components, only frequency components unnecessary for a step-out detection, such as noise, can be excluded and the step-out detection can be stably performed.

Further, the step-out can be detected, and thereby an uncontrollable state of driving due to the step-out can be prevented from being continued.

In addition, the present invention is not limited to the above-described embodiments, but includes various modifications. For example, the above-described embodiments are described in detail in order to clearly describe the present invention, and are not necessarily limited to the device having all the described constructions.

A part or all of the respective structures, functions, processing units, and processing approaches may be realized by hardware by designing through the integrated circuit, for example. Those structures, functions and the like may be realized by software by interpreting and executing the program for realizing the respective functions through a processor. Information with respect to the program, table, and file for realizing the respective functions may be stored in the recording unit such as the memory, hard disk, and SSD (Solid State Drive), or the recording medium such as the IC card, SD card, and DVD.

The examples show the control line and information line considered as necessary for the explanation, which does not necessarily show all the control lines and information lines of the product. Actually, almost all the components may be considered to be connected with one another.

### REFERENCE SIGNS LIST

- 1: Three-phase AC power source
- 2: Rectifier circuit
- 3: Smoothing circuit
- 4: Switching circuit
- 5: Current detector
- 6: Three-phase AC synchronous motor
- 7: PWM controller
- 8: Axis error estimator
- 9: Step-out determination unit
- 10: Frequency component extractor

## Claims

1. A power conversion device comprising: a switching circuit (4) that converts DC power into AC power; a PWM controller (7) that outputs a switching control signal for controlling the switching circuit (4) to be turned on or off based on a voltage command; a current detector (5) that detects a current flowing in a synchronous motor (6); and an axis error estimator that estimates an axis error between a control axis and a rotor pole axis of the synchronous motor (6) based on the voltage command and a current detected by the current detector (5); **characterized by** further comprising a frequency component extractor (10) that extracts an arbitrary frequency component of the axis error estimated by the axis error estimator by Fourier transformation; and a step-out determination unit that determines whether or not there is step-out based on the frequency component extracted by the frequency component extractor (10).

2. The power conversion device according to claim 1, wherein the frequency component of the axis error extracted by the frequency component extractor (10) is an integer multiple of a rotation frequency of the control axis.

3. The power conversion device according to claim 1, wherein when there is a step-out state is determined by the step-out determination unit, an output of the switching circuit (4) is cut off.

4. The power conversion device according to claim 1, wherein when there is a step-out state is determined by the step-out determination unit, the PWM controller (7) turns off all switches of the switching circuit (4) and cuts off the output.

5. The power conversion device according to claim 1, wherein when there is a step-out state is determined by the step-out determination unit, the PWM controller (7) outputs alarm information.

6. The power conversion device according to claim 1, wherein the step-out determination unit determines whether or not there is step-out based on the frequency component extracted by the frequency component extractor (10) and a predetermined threshold.

7. A step-out detection method comprising: a current detection step of detecting a current flowing in a synchronous motor (6); and an axis error estimation step of estimating an axis error between a control axis and a rotor pole axis of the synchronous motor (6) based on a voltage command and a current detected in the current detection step; **characterized by** further comprising a frequency component extraction step of extracting an arbitrary frequency component of the axis error estimated in the axis error estimation step by Fourier transformation; and a step-out determination step of determining whether or not there is step-out based on the frequency component extracted in the frequency component extraction step.

8. The step-out detection method according to claim 7, wherein the frequency component of the axis error extracted in the frequency component extraction step is an integer multiple of a rotation frequency of the control axis.

9. The step-out detection method according to claim 7, wherein when there is a step-out state is determined in the step-out determination step, an output to the synchronous motor (6) is cut off.

10. The step-out detection method according to claim 7, wherein when there is a step-out state is determined in the step-out determination step, all switches of a switching circuit (4) are turned off and the output to the synchronous motor (6) is cut off.

11. The step-out detection method according to claim 7, wherein when there is a step-out state is determined in the step-out determination step, alarm information is output.

12. The step-out detection method according to claim 7, wherein whether or not there is step-out is determined in the step-out determination step based on the frequency component extracted in the frequency component extraction step and a predetermined threshold.

## Patentansprüche

1. Leistungswandlervorrichtung, umfassend:
einen Schaltkreis (4), der Gleichstromleistung in Wechselstromleistung umwandelt;
eine Pulsweitenmodulations-Steuerung (7), die ein Schaltsteuersignal zur Steuerung des ein- oder auszuschaltenden Schaltkreises (4) auf der Grundlage eines Spannungsbefehls ausgibt;
einen Stromdetektor (5), der einen in einem Synchronmotor (6) fließenden Strom erfasst; und
einen Achsfehlerschätzer, der einen Achsfehler zwischen einer Steuerachse und einer Rotorpolachse des Synchronmotors (6) auf der Grundlage des Spannungsbefehls und eines von dem Stromdetektor (5) erfassten Stroms schätzt;
**dadurch gekennzeichnet, dass** sie ferner umfasst:
einen Frequenzkomponenten-Extraktor (10), der eine beliebige Frequenzkomponente des Achsenfehlers, der durch den Achsenfehler-Schätzer geschätzt wird, durch FourierTransformation extrahiert; und
eine Schrittverlust-Bestimmungseinheit, die auf der Grundlage der durch den Frequenzkomponenten-Extraktor (10) extrahierten Frequenzkomponente bestimmt, ob ein Schrittverlust vorliegt oder nicht.

2. Leistungswandlervorrichtung nach Anspruch 1, wobei die Frequenzkomponente des Achsenfehlers, die durch den Frequenzkomponenten-Extraktor (10) extrahiert wird, ein ganzzahliges Vielfaches einer Rotationsfrequenz der Steuerachse ist.

3. Leistungswandlervorrichtung nach Anspruch 1, bei der, wenn ein Schrittverlust-Zustand durch die Schrittverlust-Bestimmungseinheit bestimmt wird, ein Ausgang des Schaltkreises (4) abgeschaltet wird.

4. Leistungswandlervorrichtung nach Anspruch 1, bei der, wenn ein Schrittverlust-Zustand durch die Schrittverlust-Bestimmungseinheit bestimmt wird, die Pulsweitenmodulations-Steuerung (7) alle Schalter des Schaltkreises (4) ausschaltet und den Ausgang abschaltet.

5. Leistungswandlervorrichtung nach Anspruch 1, wobei, wenn ein Schrittverlust-Zustand durch die Schrittverlust-Bestimmungseinheit bestimmt wird, die Pulsweitenmodulations-Steuerung (7) eine Alarminformation ausgibt.

6. Leistungswandlervorrichtung nach Anspruch 1, wobei die Schrittverlust-Bestimmungseinheit auf der Grundlage der durch den Frequenzkomponenten-Extraktor (10) extrahierten Frequenzkomponente und eines vorbestimmten Schwellenwertes bestimmt, ob ein Schrittverlust vorliegt oder nicht.

7. Ein Schrittverlust-Detektionsverfahren, umfassend:
einen Stromerfassungsschritt des Erfassens eines in einem Synchronmotor (6) fließenden Stroms; und
einen Achsenfehlerschätzungsschritt des Schätzens eines Achsenfehlers zwischen einer Steuerachse und einer Rotorpolachse des Synchronmotors (6) auf der Grundlage eines Spannungsbefehls und eines im Stromerfassungsschritt erfassten Stroms;
**dadurch gekennzeichnet, dass** es ferner umfasst:
einen Frequenzkomponenten-Extraktionsschritt des Extrahierens einer beliebigen Frequenzkomponente des im Achsenfehlerschätzungsschritt durch FourierTransformation des geschätzten Achsenfehlers; und
einen Schrittverlust-Bestimmungsschritt des Bestimmens, ob ein Schrittverlust vorliegt oder nicht, auf der Grundlage der im Frequenzkomponenten-Extraktionsschritt extrahierten Frequenzkomponente.

8. Schrittverlust-Detektionsverfahren nach Anspruch 7, wobei die Frequenzkomponente des Achsenfehlers, die in dem Frequenzkomponenten-Extraktionsschritt extrahiert wurde, ein ganzzahliges Vielfaches einer Rotationsfrequenz der Steuerachse ist.

9. Schrittverlust-Detektionsverfahren nach Anspruch 7, wobei, wenn ein Schrittverlust-Zustand in dem Schrittverlust-Bestimmungsschritt bestimmt wird, eine Ausgabe an den Synchronmotor (6) abgeschaltet wird.

10. Verfahren zur Detektion eines Ausfahrzustands nach Anspruch 7, wobei, wenn ein Schrittverlust-Zustand in dem Schritt zur Bestimmung des Schrittverlusts bestimmt wird, alle Schalter eines Schaltkreises (4) abgeschaltet werden und die Ausgabe an den Synchronmotor (6) unterbrochen wird.

11. Schrittverlust-Detektionsverfahren nach Anspruch 7, wobei, wenn ein Schrittverlust-Zustand in dem Schrittverlust-Bestimmungsschritt bestimmt wird, eine Alarminformation ausgegeben wird.

12. Schrittverlust-Detektionsverfahren nach Anspruch 7, wobei in dem Schrittverlust-Bestimmungsschritt auf der Grundlage der in dem Frequenzkomponenten-Extraktionsschritt extrahierten Frequenzkomponente und eines vorbestimmten Schwellenwerts bestimmt wird, ob ein Schrittverlust vorliegt oder nicht.

## Revendications

1. Dispositif de conversion de courant comprenant : un circuit de commutation (4) qui convertit le courant continu en courant alternatif ; un dispositif de commande PWM (7) qui émet un signal de commande de commutation pour commander le circuit de commutation (4) à activer ou à désactiver sur la base d'une commande de tension ; un détecteur de courant (5) qui détecte un courant circulant dans un moteur synchrone (6) ; et un estimateur d'erreur d'axe qui estime une erreur d'axe entre un axe de commande et un axe de pôle de rotor du moteur synchrone (6) sur la base de la commande de tension et d'un courant détecté par le détecteur de courant (5) ;
**caractérisé en ce qu'**il comprend en outre un extracteur de composante de fréquence (10) qui extrait une composante de fréquence arbitraire de l'erreur d'axe estimée par l'estimateur d'erreur d'axe par transformation de Fourier ; et une unité de détermination de sortie qui détermine s'il y a ou non une sortie sur la base de la composante de fréquence extraite par l'extracteur de composante de fréquence (10).

2. Dispositif de conversion de courant selon la revendication 1, dans lequel la composante de fréquence de l'erreur d'axe extraite par l'extracteur de composante de fréquence (10) est un multiple entier d'une fréquence de rotation de l'axe de commande.

3. Dispositif de conversion de courant selon la revendication 1, dans lequel lorsqu'un état de sortie est déterminé par l'unité de détermination de sortie, une sortie du circuit de commutation (4) est interrompue.

4. Dispositif de conversion de courant selon la revendication 1, dans lequel lorsqu'un état de sortie est déterminé par l'unité de détermination de sortie, le dispositif de commande PWM (7) ferme tous les commutateurs du circuit de commutation (4) et interrompt la sortie.

5. Dispositif de conversion de courant selon la revendication 1, dans lequel lorsqu'un état de sortie est déterminé par l'unité de détermination de sortie, le dispositif de commande PWM (7) délivre en sortie des informations d'alarme.

6. Dispositif de conversion de courant selon la revendication 1, dans lequel l'unité de détermination de sortie détermine s'il y a ou non une sortie sur la base de la composante de fréquence extraite par l'extracteur de composante de fréquence (10) et d'un seuil prédéterminé.

7. Procédé de détection de sortie comprenant : une étape de détection de courant consistant à détecter un courant circulant dans un moteur synchrone (6) ; et une étape d'estimation d'erreur d'axe consistant à estimer une erreur d'axe entre un axe de commande et un axe de pôle de rotor du moteur synchrone (6) sur la base d'une commande de tension et d'un courant détecté à l'étape de détection de courant ; **caractérisé en ce qu'**il comprend en outre une étape d'extraction de composante de fréquence consistant à extraire une composante de fréquence arbitraire de l'erreur d'axe estimée à l'étape d'estimation d'erreur d'axe par transformation de Fourier ; et une étape de détermination de sortie consistant à déterminer s'il y a ou non une sortie sur la base de la composante de fréquence extraite à l'étape d'extraction de composante de fréquence.

8. Procédé de détection de sortie selon la revendication 7, dans lequel la composante de fréquence de l'erreur d'axe extraite à l'étape d'extraction de composante de fréquence est un multiple entier d'une fréquence de rotation de l'axe de commande.

9. Procédé de détection de sortie selon la revendication 7, dans lequel lorsqu'un état de sortie est déterminé à l'étape de détermination de sortie, une sortie vers le moteur synchrone (6) est interrompue.

10. Procédé de détection de sortie selon la revendication 7, dans lequel lorsqu'un état de sortie est déterminé à l'étape de détermination de sortie, tous les commutateurs d'un circuit de commutation (4) sont fermés et la sortie vers le moteur synchrone (6) est interrompue.

11. Procédé de détection de sortie selon la revendication 7, dans lequel lorsqu'un état de sortie est déterminé à l'étape de détermination de sortie, une information d'alarme est délivrée en sortie.

12. Procédé de détection de sortie selon la revendication 7, dans lequel la présence ou non d'une sortie est déterminée à l'étape de détermination de sortie sur la base de la composante de fréquence extraite à l'étape d'extraction de composante de fréquence et d'un seuil prédéterminé.
